Europäisches Patentamt

European Patent Office

Office européen des brevets

(11) Publication number: **0 282 113 B1**

(19)

(12) # EUROPEAN PATENT SPECIFICATION

(45) Date of publication of patent specification: **16.12.92**  (51) Int. Cl.⁵: **H01S  3/08**, H01S 3/106

(21) Application number: **88200303.1**

(22) Date of filing: **19.02.88**

---

(54) **Laser device.**

---

(30) Priority: **20.02.87 NL 8700425**

(43) Date of publication of application:
**14.09.88 Bulletin  88/37**

(45) Publication of the grant of the patent:
**16.12.92 Bulletin  92/51**

(84) Designated Contracting States:
**DE GB IT NL**

(56) References cited:

**OPTICS AND LASER TECHNOLOGY, vol. 14, no. 3, June 1982, pages 137-142, Butterworth & Co. (Publishers) Ltd, Exeter, GB; H. DANESHVAR-HOSSEINI et al.: "A microprocessor-controlled laser grating system for laser tuning"**

(73) Proprietor: **ULTRA-CENTRIFUGE NEDERLAND N.V.**
**Planthofsweg 77**
**NL-7601 PJ Almelo(NL)**

(72) Inventor: **Ernst, Gerardus Joannes**
**Wilgenkamp 42**
**NL-7581 HC Losser(NL)**
Inventor: **Godfried, Herman Philip**
**De Kosterkamp 13**
**NL-7491 KP Delden(NL)**

(74) Representative: **Smulders, Theodorus A.H.J., Ir. et al**
**Vereenigde Octrooibureaux Nieuwe Parklaan 97**
**NL-2587 BN 's-Gravenhage(NL)**

EP 0 282 113 B1

IDEM

IEEE JOURNAL OF OUANTUM ELECTRONICS, vol. OE-19, no. 9, September 1983, pages 1414-1426, IEEE, New York, US; K. STENER-SEN et al.: "Continuously tunable optically pumped high-pressure DF - CO2 transfer laser"

IDEM

IBM TECHNICAL DISCLOSURE BULLETIN, vol. 12, no. 12, May 1970, page 2180, New York, US; A.W. SMITH: "Frequency-swept laser with sweep control"

APPLIED PHYSICS LETTERS, vol. 26, no. 8, 15th April 1975, pages 454-456, American Institute of Physics, New York, US; F. O'NEILL et al.: "Interferometric tuning of a 15-atm CO2 laser"

SOVIET JOURNAL OF OUANTUM ELECTRON-ICS, vol. 10, no. 6, June 1980, pages 712-717, American Institute of Physics, New York, US; V.P. AVTONOMOV et al.: "Selection of CO2 laser lines by a reflecting diffraction inter-ferometer"

## Description

This invention relates to a laser device comprising a cavity in which a laser medium is contained, two end mirrors disposed at opposite ends of said cavity to define a resonator, at least one of said two end mirrors being partially translucent, and a grating disposed behind said at least one partially translucent mirror.

A laser device of this kind is disclosed in the article in IEEE Journal of Quantum Electronics, Volume QE-7, No. 10, October l971, pp 484-488. This prior laser device is an improvement over lasers only provided with two end mirrors or with one end mirror and one grating. In fact, generally speaking, a laser will oscillate at a frequency at which the ratio between the gain and the losses in one pass through the cavity is highest. With a resonator bounded by two mirrors, i.e. a broadband reflector at one end and a broadband partial reflector at the other, the strongest transition, that is to say, the transition with the highest gain will come to oscillate. To cause weaker transitions to oscillate, and hence to cause the laser to oscillate at a different frequency, the cavity should be such that the quality of the oscillating cavity is high for the desired weak transition and low for the stronger transitions. This can be achieved by disposing a grating instead of one of the end mirrors. Such a construction, however, is not suitable for very weak transitions, because the reflection coefficient of a grating is limited and hence the quality of the oscillating cavity not high. Furthermore, this construction is unsuitable for high-capacity continuous lasers or high-energetically pulsed lasers, because the absorption coefficient of a grating is high, which may lead to deformation of, or damage to the grating. The authors of the above article propose to replace the grating by a grating-mirror combination, so that, as it were, a three-mirror system is formed. In such a construction, the radiation load on the grating is appreciably less than with a construction having one mirror and a grating. The reflection coefficient of a grating-mirror combination is also higher than that of a grating alone. The prior device is very suitable for use in providing single-mode operation in a continuous $CO_2$ laser at a large number of transitions, including weak ones. For pulsed $CO_2$ lasers, the system also operates satisfactorily, and a considerable number of the weaker transitions can be caused to oscillate. However, the prior device also has limitations. In order to obtain oscillation at weak transitions, the cavity formed by the two end mirrors must have such a low quality that the undesirable strong transitions remain below, or only just above the threshold values. This requirement, however, directly leads to limitations for the quality of the cavity formed by the one end mirror, at one end, and the combination of end mirror and grating, at the other, so that it is not very possible to achieve oscillation at very weak transitions. Furthermore, the weak transitions which do permit to be caused to oscillate do not operate sufficiently far above the threshold value to achieve a high laser output capacity.

It is an object of the present invention to improve the prior device and to provide a laser device in which weak transitions can be better caused to oscillate than in the prior device. This object is achieved, according to the present invention, with a laser device in which at least one of the end mirrors is a dichroic mirror having such frequency-dependent properties that the reflection coefficient for frequencies associated with one or more selected weak transitions in the laser medium has a desired relatively high value and the reflection coefficient for frequencies associated with strong transitions has a minimum value.

When, in accordance with this invention, at least one of the two end mirrors is formed as a dichroic mirror, and the frequency-dependent properties are suitably selected, it can be achieved that the quality of the cavity is controlled to be virtually zero for the undesirable transitions, while at the same time the quality of the cavity can be made much higher for the desired wavelength, associated with the desired weak transition. As a result, much weaker transitions can be caused to oscillate than has hitherto been possible, and the output of the laser for the weak transitions can be very much higher. Furthermore, delicate optical components, such as the grating, are better protected owing to a higher reflection coefficient of the dichroic mirror.

The end mirror in the laser device according to the invention can be formed as a dichroic mirror by providing the end mirror in question with a coating such that the reflection coefficient for frequencies associated with the desired weak transition acquires a certain desirable relatively high value and the reflection coefficient for frequencies associated with the strong transitions, which are to be suppressed, becomes of minimum value. The application of such a coating is not a simple matter, while such a coating is vulnerable to high radiation loads and is only suitable for a limited number of weak transitions. A preferred embodiment of the present invention, therefore, is one in which the dichroic mirror is a reflection etalon. Suitably, the reflection etalon is built up from two closely-spaced plates of suitable material, one surface of each plate being non-coated or provided with a partially reflecting coating, and the other surface being either provided with an anti-reflection coating or disposed at the angle of Brewster. Such a construction is suitable, for example, in the case of a $CO_2$ laser, if, for example germanium or zinc selenide is selected for the material of the plates.

The use of a reflection etalon is particularly favourable in cases where the difference in frequencies of the weak, desirable transitions and the strong, undesirable transitions is small. When a reflection etalon is used, which consists of two reflecting surfaces, these should preferably be spaced apart a distance a which approximately satisfies the following equation:

$$a = \frac{c}{4 \left| \nu\mathbf{strong} - \nu\mathbf{weak} \right|}$$

where c represents the velocity of light and $\nu$strong and $\nu$weak represent the frequencies of the strong, undesirable transition and the weak, desirable transition in the laser medium. In that case the reflection coefficient is minimal for the strong transition and maximal for the desired weak transition. By rendering the distance a variable, it is possible to obtain oscillation at different weak transitions.

Although, in principle, both the one and the other end mirror in the laser device according to the invention can be the dichroic mirror, it is preferable that the end mirror at the end of the grating is the dichroic mirror.

It is noted that the article in Optics and Laser Technology, Volume 14 (1982), June, No. 3, pp 137-142 discloses an arrangement in which an end mirror of a laser device has been replaced by a grating, and a Fabry-Perot interferometer is disposed between the grating and the cavity. A similar arrangement, but then with a ZnSe etalon instead of the Fabry-Perot interferometer is disclosed in the article in IEEE Journal of Quantum Electronics, Volume QE 19 (1983) pp 1414-1426.

The difference between these two prior devices and the device according to the present invention is that both the Fabry-Perot interferometer and the ZnSe etalon function as a transmission etalon, whereas the dichroic mirror used in the present invention is used as a reflection etalon. According to the invention, therefore, the desired wavelength is reflected and the undesired one is passed, so that the latter is lost for the oscillation cavity.

The use of a reflection etalon in a laser device is known per se from IBM Technical Disclosure Bulletin, Volume 12, No. 12, pp 2180. The device described in it is an optical sweep generator, which is unsuitable for the use of line selection.

If the single-mode operation of the laser device according to the invention gives any problems, the system can be improved still further by placing a suitable transmission etalon between the dichroic mirror and the grating. The use of a transmission etalon for this purpose is known per se from the article in Optics Communications, Volume 57, No. 2, February 1986, pp 111-116.

The laser device according to the invention can be improved still further as follows. In order to cause the desired transition to oscillate, an absorbing material is placed in the cavity formed by the two end mirrors. The absorbing material serves to satisfy the requirement that it absorbs the strong transitions and passes the weak, undesirable transitions without appreciable attenuation. One problem in this embodiment is that a different absorbing material should possibly be used for any other laser device and possibly for any other weak transition to be favoured. It is not possible, therefore, to give a uniform prescription with regard to the absorbing material.

It is further noted that the use of an absorbing material in a laser device is known per se, for example, from the article in Applied Physics Letters, Volume 26, pp 454-456.

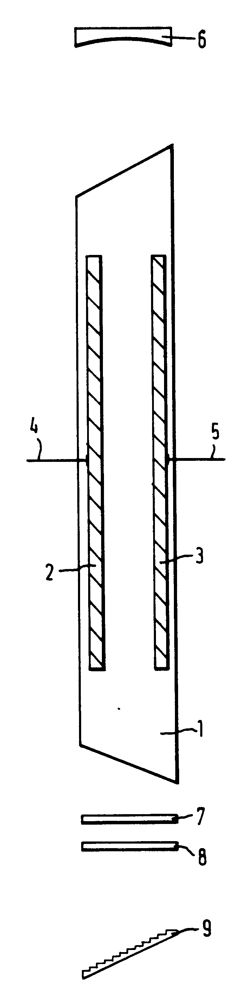

The invention will be described further with reference to the accompanying drawing, in which the single figure is a diagrammatic representation in cross-section, showing one embodiment of the laser device according to the present invention.

In the device shown, 1 is a conventional laser tube of the TEA type (transversely excited atmospheric). Disposed within laser tube 1 are two electrodes 2 and 3 each for example 40 cm long, and the distance between the electrodes 2 and 3 being, for example 2 cm. Electrode 2 is connected through a line 4, passed through the wall of laser tube 1, and electrode 3 is connected through a similar line 5, to a source of voltage not shown, by means of which a discharge can be effected perpendicularly to the beam axis in the laser tube 1. A suitable laser medium to be used within laser tube 1 is a gas consisting of 60% helium, 20% nitrogen and 20% $CO_2$ with a total pressure of approximately 1 atmosphere.

Disposed adjacent one end of laser tube 1 is a partially translucent mirror 6. As shown, the mirror 6 is of the flat-hollow (planoconcave) type with the hollow side facing the laser tube 1. A suitable mirror is a flat-hollow plate of zinc selenide with a diameter of 25 mm, a radius of curvature of 10 m and a reflection coefficient of 60%.

4

Disposed adjacent the opposite end of laser tube 1 is the dichroic mirror to be used according to the present invention, which in the embodiment shown consists of two flat plates 7 and 8 of, for example, zinc selenide, which are each provided at the sides facing away from each other with an anti-reflecting coating and at the facing sides are not coated. Plates 7 and 8 have a diameter of, for example, 25 mm and are spaced apart a distance a of 63.5 $\mu$m. Plates 7 and 8 are each mounted in mirror holders, not shown, to enable the plates to be disposed in accurate parallel relationship. One of the two mirror holders can further be mounted on a translatory carriage so that the distance a between plates 7 and 8 may be adjusted as desired.

Disposed behind the dichroic mirror 7, 8, viewed from laser tube 1, is a grating 9 of, for example, aluminium. Grating 9 has, for example, a diameter of 25 mm and a thickness of 10 mm, and is disposed at a perpendicular distance of about 9 cm from the dichroic mirror 7, 8. A suitable grating has 150 lines per mm for 10.6 $\mu$m with a blaze angle of about 52°.

As is well known, a laser is capable of oscillating at different discrete frequencies, which frequencies are grouped in so-called bands, where the oscillation modes are close together. For a $CO_2$ laser, these are designated by 9 and 10, which notation expresses that the radiation has a wavelength of between 9.1 and 9.9 $\mu$m and between 10 and 11 $\mu$m, respectively. The bands are, in turn, subdivided into branches, which are designated by the letters P and R, and the individual transitions are numbered according to the rotation conditions to which they relate. For this, even numbers are used only. In a $CO_2$ laser, the 10P20, 10P18, 10P22 transitions are strong, and the 10R16, 10R18, 9P18, 9P20, 9R16 are strong too. Weak transitions are, for example, 10R30, 10R32, 10R34 et seq. Using the device according to the present invention, it has been found possible to suppress the very strong transitions, in particular 10P18-10P22, and obtain oscillation of 10R34 and 10R36 and other weak transitions, which otherwise can hardly if at all be obtained. With the device according to the invention, an output of about 70 MJ per 100 n sec pulse was achieved, which means a power of 700 kW.

In the laser tube 1 of the device according to the invention, an absorbing material may be included, which absorbs the undesirable strong transitions in the laser medium and does not affect the weak, desirable transitions. Such an absorbing material may be a gas mixture, in which the ratio of the various components should be experimentally determined, depending on the undesirable and desirable transitions, and which consists, for example, of $SF_6$, $C_4F_8$ and other suitable fluorine containing gases.

**Claims**

1. A laser device comprising a cavity in which a laser medium is contained, two end mirrors disposed at opposite ends of said cavity to define a resonator, at least one of said two end mirrors being partially translucent, and a grating disposed behind said at least one partially translucent mirror, characterized in that at least one of the end mirrors is a dichroic mirror having such frequency-dependent properties that the reflection coefficient for frequencies associated with one or more selected weak transitions in the laser medium has a desired relatively high value and the reflection coefficient for frequencies associated with strong transitions has a minimum value.

2. Apparatus as claimed in claim 1, characterized in that the dichroic mirror is a reflection etalon.

3. Apparatus as claimed in claim 2, characterized in that the reflection etalon is built up from two closely-spaced plates of Ge of ZnSe, one surface of which is non-coated and the other surface of which is either provided with an anti-reflection coating or disposed at the angle of Brewster.

4. Apparatus as claimed in claims 2-3, characterized in that the reflection etalon comprises two reflective surfaces spaced apart a distance a approximately satisfying the following equation:

$$a = \frac{c}{4\left|\nu\text{strong} - \nu\text{weak}\right|}$$

where c is the velocity of light and $\nu$strong and $\nu$weak respectively represent the frequencies of the strong, undesirable transition and the weak, desirable transition in the laser medium.

**5.** Apparatus as claimed in claim 4, characterized in that the distance a between the surfaces of the reflection etalon is adjustable.

**6.** Apparatus as claimed in claims 1-5, characterized in that the end mirror at the end of the grating is the dichroic mirror.

**7.** Apparatus as claimed in claims 1-6, characterized in that the cavity defined by the two end mirrors contains an absorbing material which absorbs the frequencies associated with the undesirable strong transitions in the laser medium of the apparatus and passes the frequencies associated with the weak desirable transitions without appreciable attenuation.

**Patentansprüche**

**1.** Eine Laservorrichtung umfassend

einen Hohlraum, in dem ein Lasermedium enthalten ist, zwei Endspiegel, die an gegenüberliegenden Enden des Hohlraumes angeordnet sind, um einen Resonator zu definieren, wobei wenigstens einer der zwei Endspiegel teillichtdurchlässig ist und ein Gitter hinter dem wenigstens einen teillichtdurchlässigen Spiegel angeordnet ist,
**dadurch gekennzeichnet,**
daß wenigstens einer der Endspiegel einen dichroitischen Spiegel mit derart frequenzabhängenden Eigenschaften hat, daß der Reflexionskoeffizient für Frequenzen, die mit einem oder mehreren ausgewählten schwachen Übergängen in dem Lasermedium verbunden sind, einen gewünschten relativ hohen Wert hat und der Reflexionskoeffizient für Frequenzen, die mit starken Übergängen verbunden sind, einen Minimalwert hat.

**2.** Vorrichtung nach Anspruch 1,
dadurch gekennzeichnet,
daß der dichroitische Spiegel aus Reflexionsetalon ist.

**3.** Vorrichtung nach Anspruch 2,
dadurch gekennzeichnet,
daß das Reflexionsetalon aus zwei nahe beabstandeten Platten aus Ge oder aus ZnSe ausgebildet ist, wobei eine Oberfläche davon nicht beschichtet ist und die andere Oberfläche davon entweder mit einer Antireflexionsbeschichtung versehen ist oder in einem Brewsterwinkel angeordnet ist.

**4.** Vorrichtung nach Anspruch 2 bis 3,
dadurch gekennzeichnet,
daß das Reflexionsetalon zwei reflektierende Oberflächen umfaßt, die voneinander um etwa einen Abstand a beabstandet sind, der der folgenden Gleichung genügt:

$$a = \frac{c}{4\,|\nu\,\text{stark} - \nu\,\text{schwach}|},$$

wobei c die Lichtgeschwindigkeit und ν stark und ν schwach jeweils die Frequenzen des starken unerwünschten Überganges und des schwachen gewünschten Überganges im Lasermedium darstellen.

**5.** Vorrichtung nach Anspruch 4,
dadurch gekennzeichnet,
daß der Abstand a zwischen den Oberflächen des Reflexionsetalon einstellbar ist.

**6.** Vorrichtung nach einem der Ansprüche 1 bis 5,
dadurch gekennzeichnet,
daß der Endspiegel an dem Ende des Gitters der dichroitische Spiegel ist.

**7.** Vorrichtung nach einem der Ansprüche 1 bis 6,
dadurch gekennzeichnet,
daß der Hohlraum, der durch zwei Endspiegel definiert ist, ein absorbierendes Material enthält, das die Frequenzen absorbiert, die mit den unerwünschten starken Übergängen im Lasermedium der Vorrichtung verbunden sind und die Frequenzen, die mit den schwachen gewünschten Übergängen verbunden sind, ohne nennenswerte Schwächung durchläßt.

**Revendications**

**1.** Un appareil laser consistant en une cavité comprenant un milieu laser, deux miroirs d'extrémité installés vis-à-vis l'un de l'autre aux extrémités de ladite cavité pour déterminer une résonateur, tout au moins un des deux miroirs en question étant partiellement translucide et un réseau de diffraction installé derrière ledit miroir tout au moins partiellement translucide, caractérisé par le fait que tout au moins un des miroirs d'extrémité est un miroir dichroïtique disposant des qualités dépendant de la fréquence d'une telle nature que le coefficient de réflexion pour des fréquences associées avec une ou plusieurs faibles transitions sélectionnées dans le milieu laser produira une valeur désiree relativement haute et que le coefficient de réflexion pour des fréquences associées avec des transitions fortes produira une valeur minimale.

**2.** Le dispositif revendiqué selon la revendication 1, caractérisé par le fait que le miroir dichroïtique est un étalon de réflection.

**3.** Le dispositif revendiqué selon la revendication 2, caractérisé par le fait que l'étalon de réflection est fait de deux plaques placées étroitement l'une près de l'autre et fabriquées de Ge ou ZnSe, dont la surface de l'une est non-enduite et la surface de l'autre est munie soit d'un enduit antiréflection soit installée à l'angle de Brewster.

**4.** Le dispositif revendiqué selon les revendications 2-3 caractérisé par le fait que l'étalon de réflection comprend deux surfaces réflectrices plantées séparément à une distance a) répondant environ à l'équation suivante:

$$a = \frac{c}{4 \; v \; fort \; - \; v \; faible}$$

où c représente la vitesse de la lumière et v fort et v faible représentent respectivement les fréquences de la forte transition indésirable et la faible transition désirable dans le milieu laser.

**5.** Le dispositif revendiqué selon la revendication 4 caractérisé par le fait que la distance a) entre les surfaces de l'étalon de réflection est réglable.

**6.** Le dispositif revendiqué selon les revendications 1-5 caractérisés par le fait que le miroir d'extrémité à l'extrémité du réseau de diffraction est le miroir dicroïtique.

**7.** Le dispositif revendiqué selon les revendications 1-6 caractérisé par le fait que la cavité déterminée par les deux miroirs d'extrémité contient du matériel absorbant qui absorbe les fréquences associées avec les fortes transitions indésirables dans le milieu laser du dispositif et qui rend les fréquences associées avec les faibles transitions désirables sans atténuation sensible.